# EUROPEAN PATENT APPLICATION

(11) **EP 3 447 899 A1**
(43) Date of publication of application: **27.02.2019**
(21) Application number: 16899419.2
(22) Date of filing: 21.04.2016
(51) Int. Cl.: H02M 7/48, H02J 9/06

(54) **UNINTERRUPTIBLE POWER SUPPLY DEVICE**

(71) Applicant: Toshiba Mitsubishi-Electric Industrial Systems Corporation, Tokyo 104-0031 (JP)
(72) Inventor: TOYODA, Masaru, Tokyo 104-0031 (JP)
(74) Representative: Winter, Brandl, Fürniss, Hübner, Röss, Kaiser, Polte - Partnerschaft mbB
(86) International application number: PCT/JP2016/062595
(87) International publication number: WO 2017/183147

(57) **Abstract**

An uninterruptible power supply includes: a converter (4) configured to convert alternating-current power supplied from an alternating-current power supply (5 1) into direct-current power; an inverter (7) configured to convert the direct-current power generated by the converter or direct-current power of a storage battery (52) into alternating-current power and supply the alternating-current power to a load (53, 54); and a control circuit (14) configured to control the inverter. When activating the inverter, the control circuit gradually increases a voltage value (V) of an output voltage (VO) and a frequency (F) of the output voltage (VO) while maintaining a ratio of the voltage value (V) and the frequency (F) at a fixed value (F).

## Description

### TECHNICAL FIELD

The present invention relates to an uninterruptible power supply, and more particularly to an uninterruptible power supply including a forward converter and an inverse converter.

### BACKGROUND ART

Patent Document 1 (Japanese Patent Laying-Open No. 2006-197660) discloses an uninterruptible power supply that prevents an overcurrent from flowing when activating an inverse converter. In this uninterruptible power supply, when activating the inverse converter, while maintaining a frequency of an output voltage of the inverse converter at a constant frequency higher than a rated frequency a voltage value of the output voltage of the inverse converter is gradually increased to a rated voltage value, and thereafter, the frequency of the output voltage of the inverse converter is lowered to the rated frequency.

### CITATION LIST

### PATENT DOCUMENT

PTD 1: Japanese Patent Laying-Open No. 2006-197660

### SUMMARY OF INVENTION

### TECHNICAL PROBLEM

However, in Patent Document 1, when activating the inverse converter, the frequency of the output voltage of the inverse converter is set to a constant frequency higher than the rated frequency, which limits a load in type to a capacitive load, and a transformer, a motor and the like have been unconnectable as a load.

Accordingly, a main object of the present invention is to provide an uninterruptible power supply capable of preventing an overcurrent from flowing when activating an inverse converter regardless of the type of the load.

### SOLUTION TO PROBLEM

An uninterruptible power supply according to the present invention is an uninterruptible power supply configured to supply alternating-current power to a load by using electric power supplied from an alternating-current power supply or a power storage device, comprising: a forward converter configured to convert alternating-current power supplied from the alternating-current power supply into direct-current power; an inverse converter configured to convert the direct-current power generated by the forward converter or direct-current power of the power storage device into alternating-current power and supply the alternating-current power to the load; and a control circuit configured to control the inverse converter, when activating the inverse converter, the control circuit is configured to, while maintaining a ratio of a voltage value of an output voltage of the inverse converter and a frequency of the output voltage of the inverse converter at a predetermined value, gradually increase the voltage value of the output voltage of the inverse converter and the frequency of the output voltage of the inverse converter.

### ADVANTAGEOUS EFFECTS OF INVENTION

In the uninterruptible power supply according to the present invention, when activating the inverse converter, while maintaining a ratio of a voltage value of an output voltage of the inverse converter and a frequency of the output voltage of the inverse converter at a constant value, the voltage value of the output voltage of the inverse converter and the frequency of the output voltage of the inverse converter are each gradually increased. This can prevent an overcurrent from flowing when activating the inverse converter irrespective of the type of the load.

### BRIEF DESCRIPTION OF DRAWINGS

Fig. 1 is a circuit block diagram showing a configuration of an uninterruptible power supply according to a first embodiment of the present invention.
Fig. 2 is a flowchart showing an operation of a control circuit 14 shown in Fig. 1.
Fig. 3 is a circuit block diagram showing a configuration of an uninterruptible power supply according to a second embodiment of the present invention.
Fig. 4 is a flowchart showing an operation of a control circuit 14A shown in Fig. 3.
Fig. 5 is a diagram showing a relationship between an amount of air blown by a blower shown in Fig. 3 and power consumed.

### DESCRIPTION OF EMBODIMENTS

### [First Embodiment]

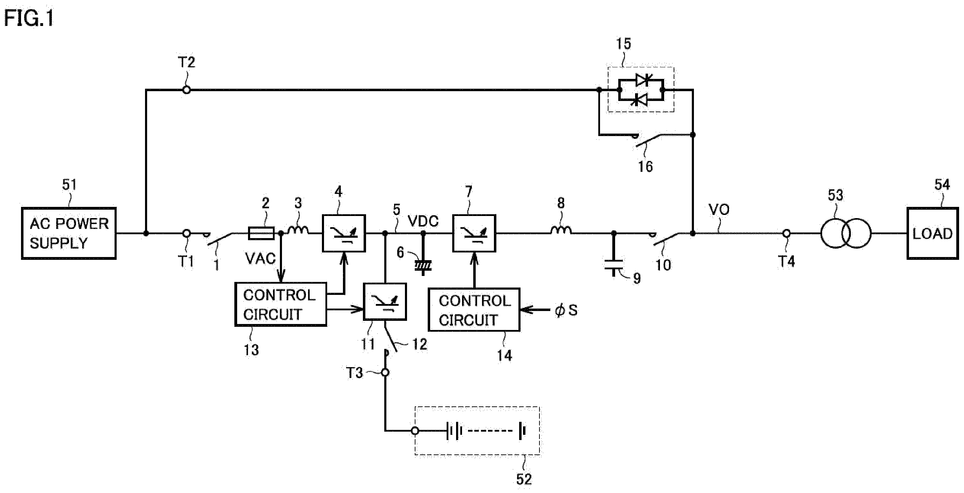

Fig. 1 is a circuit block diagram showing a configuration of an uninterruptible power supply according to a first embodiment of the present invention. In Fig. 1, the uninterruptible power supply includes an input terminal T1, a bypass terminal T2, a direct-current terminal T3, and an output terminal T4.

Input terminal T1 is connected to an alternating-current power supply 51. Alternating-current power supply 51 may be a commercial alternating-current power supply or a private power generator. Alternating-current power supply 51 supplies, for example, alternating-current power of a commercial frequency to the uninterruptible power supply. Bypass terminal T2 is connected to a bypass alternating-current power supply. The bypass alternating-current power supply may be a commercial alternating-current power supply or a private power generator. Fig. 1 shows a case where bypass terminal T2 is connected to alternating-current power supply 51 together with input terminal T1.

Direct-current terminal T3 is connected to a storage battery 52 (a power storage device). Storage battery 52 stores direct-current power. Storage battery 52 is charged when alternating-current power is normally supplied from alternating-current power supply 51, and storage battery 52 is discharged when alternating-current power is not normally supplied from alternating-current power supply 51 (for example, during power failure). A capacitor may be connected instead of storage battery 52. Storage battery 52 may be included in the uninterruptible power supply. Output terminal T4 is connected to a primary winding of a transformer 53. Transformer 53 has a secondary winding connected to a load 54. Transformer 53 transforms an alternating-current voltage VO of output terminal T4 at a predetermined ratio and thus applies it to load 54. Load 54 is driven by alternating-current power supplied from the uninterruptible power supply through transformer 53.

The uninterruptible power supply further includes switches 1, 10, 12 and 16, a fuse 2, reactors 3 and 8, a converter 4, a direct-current bus 5, capacitors 6 and 9, an inverter 7, a bidirectional chopper 11, control circuits 13, 14, and a semiconductor switch 15.

Switch 1, fuse 2, and reactor 3 are connected in series between input terminal T1 and an input terminal of converter 4. Switch 1 is turned on when using the uninterruptible power supply, and switch 1 is turned off, for example, during maintenance of the uninterruptible power supply. When an overcurrent flows, fuse 2 is blown to protect the uninterruptible power supply. Reactor 3 passes alternating-current power of a commercial frequency from alternating-current power supply 51 to converter 4 and prohibits passage of a signal of a switching frequency generated by converter 4.

Converter 4 receives alternating-current power supplied from alternating-current power supply 51 via switch 1, fuse 2, and reactor 3. Converter 4 is controlled by control circuit 13, and when alternating-current power is normally supplied from alternating-current power supply 51, converter 4 receives the alternating-current power from alternating-current power supply 51, converts it into direct-current power, and outputs it to an output terminal. When alternating-current power is not normally supplied from alternating-current power supply 51 (that is, when power failure occurs), converter 4 is stopped from operating. Converter 4 constitutes a forward converter.

Direct-current bus 5 is connected between an output terminal of converter 4 and an input terminal of inverter 7 and transmits direct-current power. Capacitor 6 is connected to direct-current bus 5 and stabilizes a direct-current voltage VDC of direct-current bus 5. Inverter 7 is controlled by control circuit 14, and converts direct-current power received on direct-current bus 5 into alternating-current power and outputs it to an output terminal

Reactor 8 is connected between an output terminal of inverter 7 and one terminal of switch 10. Capacitor 9 is connected to one terminal of switch 10. Switch 10 has the other terminal connected to output terminal T4.

Reactor 8 and capacitor 9 configure a low-pass filter, and passes, for example, alternating-current power of a commercial frequency generated by inverter 7, and prohibits passage of a signal of a switching frequency generated at inverter 7. In other words, reactor 8 and capacitor 9 convert rectangular wave alternating-current voltage output from inverter 7 into a sinusoidal alternating-current voltage. Inverter 7, reactor 8, and capacitor 9 configure an inverse converter.

Switch 10 is turned on in an inverter power supply mode in which alternating-current power from inverter 7 is supplied to load 54, and switch 10 is turned off in a bypass power supply mode in which alternating-current power supplied from alternating-current power supply 51 via bypass terminal T2 is supplied to load 54.

Bidirectional chopper 11 and switch 12 are connected in series between direct-current bus 5 and direct-current terminal T3. Switch 12 is turned on when using the uninterruptible power supply, and switch 12 is turned off for example at the time of maintenance of storage battery 52. Bidirectional chopper 11 is controlled by control circuit 13, and when alternating-current power is normally supplied from alternating-current power supply 51, bidirectional chopper 11 stores to storage battery 52 direct-current power received from direct-current bus 5, whereas when alternating-current power is not normally supplied from alternating-current power supply 51 (that is, during power failure), bidirectional chopper 11 supplies direct-current power of storage battery 52 to direct-current bus 5.

Control circuit 13 controls converter 4 and bidirectional chopper 11 based on an alternating-current voltage VAC supplied from alternating-current power supply 51. Control circuit 13 detects a voltage of a node between fuse 2 and reactor 3 as alternating-current voltage VAC for example.

When alternating-current voltage VAC is normal (that is, when the alternating-current power is normally supplied from alternating-current power supply 51), control circuit 13 controls converter 4 to convert alternating-current power into direct-current power and also controls bidirectional chopper 11 to pass a current from direct-current bus 5 to storage battery 52 to charge storage battery 52.

When alternating-current voltage VAC is not normal (that is, when alternating-current power is not normally supplied from alternating-current power supply 51), control circuit 13 controls bidirectional chopper 11 to pass a direct current from storage battery 52 to direct-current bus 5 to discharge storage battery 52.

Control circuit 14 in response to an activation command signal φS activates inverter 7 and controls inverter 7 to convert direct-current power into alternating-current power. During an activation period for activating inverter 7, control circuit 14 maintains a ratio V/F of an effective voltage value V of an output voltage VO of the uninterruptible power supply (that is, output voltage VO of the inverse converter) and a frequency F of output voltage VO at a fixed value K, while control circuit 14 gradually increases effective voltage value V of output voltage VO from a lower limit voltage value to a rated voltage value VR and also gradually increases frequency F of output voltage VO from a lower limit frequency to a rated frequency FR.

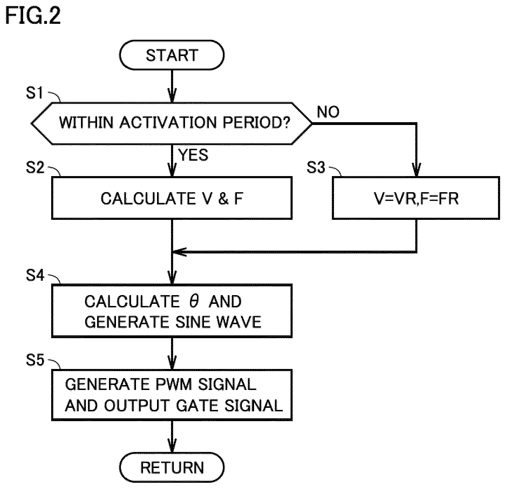

Fig. 2 is a flowchart showing an operation of control circuit 14. In step S1, control circuit 14 determines whether it is currently within an activation period. Control circuit 14 activates inverter 7 in response to activation command signal φS. For example, when a time t from a time when activation command signal φS is received is equal to or less than a predetermined time T (t≤T), control circuit 14 determines that it is within the activation period, whereas when time t exceeds predetermined time T (t > T), control circuit 14 determines that it is not within the activation period.

If control circuit 14 determines in step S1 that it is within the activation period, then, in step S2, control circuit 14 calculates effective voltage value V and frequency F of output voltage VO based on time t, and then proceeds to step S4.

For example, control circuit 14 calculates effective voltage value V so that output voltage VO has effective voltage value V increasing from a lower limit voltage value in proportion to time t during the activation period and reaches rated voltage value VR when the activation period ends. Control circuit 14 calculates frequency F so that ratio V/F of effective voltage value V and frequency F has fixed value K. Fixed value K is set such that frequency F reaches rated frequency FR when the activation period ends (K = VR/FR). Rated frequency FR is, for example, a commercial frequency. An excitation current I passes through transformer 53, and when transformer 53 has an input reactance L, I = V/(2πF × L) = K/(2πL), and excitation current I has a fixed value.

If control circuit 14 determines in step S1 that currently it is not within the activation period (that is, the activation period has passed), then, in step S3, control circuit 14 sets effective voltage value V of output voltage VO to rated voltage value VR (V = VR), and sets frequency F of output voltage VO to rated frequency FR (F = FR), and proceeds to step S4.

In step S4, based on effective voltage value V and frequency F calculated in steps S2 and S3, control circuit 14 calculates a phase angle θ of output voltage VO and generates a sine wave representing a waveform of output voltage VO. In step S5, control circuit 14 generates a PWM (pulse width modulation) signal necessary for outputting alternating-current voltage VO of the waveform generated in step S4, amplifies the PWM signal to generate a gate signal, outputs it to inverter 7, and returns to step S1.

Returning to Fig. 1, semiconductor switch 15 is connected between bypass terminal T2 and output terminal T4, and when inverter 7 fails, semiconductor switch 15 is instantaneously turned on, and after a predetermined period of time, semiconductor switch 15 is turned off. Semiconductor switch 15 includes two thyristors. One thyristor has an anode and a cathode connected to terminals T2 and T4, respectively, and the other thyristor has an anode and a cathode connected to terminals T4 and T2, respectively. Switch 16 is connected to semiconductor switch 15 in parallel, and turned on when inverter 7 fails.

When inverter 7 fails, semiconductor switch 15 is instantaneously turned on and switch 16 is turned on, and switch 10 is turned off, and subsequently, semiconductor switch 15 is turned off. Thus, alternating-current power is supplied from alternating-current power supply 51 to load 54 via switch 16 and transformer 53, and an operation of load 54 is continued.

Note that semiconductor switch 15 is turned on for a predetermined time in order to prevent semiconductor switch 15 from being damaged by heat. Switch 16 is turned on not only when inverter 7 fails but also in the bypass power supply mode in which alternating-current power of alternating-current power supply 51 is supplied to load 54 via switch 16 and transformer 53.

Hereinafter, an operation of the uninterruptible power supply will be described. It is assumed that in an initial state, alternating-current power is normally supplied from alternating-current power supply 51, switches 1, 10, and 12 are turned on, and semiconductor switch 15 and switch 1 are turned off. The alternating-current power from alternating-current power supply 51 is supplied via switch 1, fuse 2, and reactor 3 to converter 4 and converted into direct-current power. The direct-current power generated by converter 4 is stored to storage battery 52 via bidirectional chopper 11 and switch 12 and is also supplied to inverter 7 via direct-current bus 5.

In response to activation command signal φS, control circuit 14 activates inverter 7. Inverter 7 generates alternating-current power which is in turn supplied via reactor 8, switch 10 and transformer 53 to load 54. In the activation period, ratio V/F of effective voltage value V and frequency F of output voltage VO is maintained at fixed value K, and effective voltage value V and frequency F are each gradually increased. This maintains excitation current I of transformer 53 at a fixed value (K/2πL) and prevents an overcurrent from flowing from inverter 7 to transformer 53. When the activation period ends, effective voltage value V and frequency F are rated voltage value VR and rated frequency FR, respectively, and load 54 is stably driven.

When inverter 7 fails, semiconductor switch 15 is instantaneously turned on, and the alternating-current power from alternating-current power supply 51 is supplied to load 54 via semiconductor switch 15 and transformer 53. Switch 10 is turned off and switch 16 is turned on, and thereafter, semiconductor switch 15 is turned off. Thus, the alternating-current power from alternating-current power supply 51 is supplied to load 54 via switch 16 and transformer 53, and an operation of load 54 is thus continued.

When the alternating-current power from alternating-current power supply 51 is not normally supplied, control circuit 13 stops converter 4 from operating. Control circuit 13 controls bidirectional chopper 11 to pass a current from storage battery 52 to direct-current bus 5 and discharge storage battery 52. Direct-current power supplied from storage battery 52 to direct-current bus 5 is converted into alternating-current power by inverter 7 and supplied to load 54 via transformer 53. As long as direct-current power is stored in storage battery 52, an operation of load 54 can be continued.

Thus, in the first embodiment, when activating inverter 7, while maintaining ratio V/F of voltage value V and frequency F of output voltage VO at fixed value F, voltage value V and frequency F of output voltage VO are each gradually increased. This can prevent an overcurrent from flowing when activating inverter 7 irrespective of the type of the load connected to output terminal T4.

### [Second Embodiment]

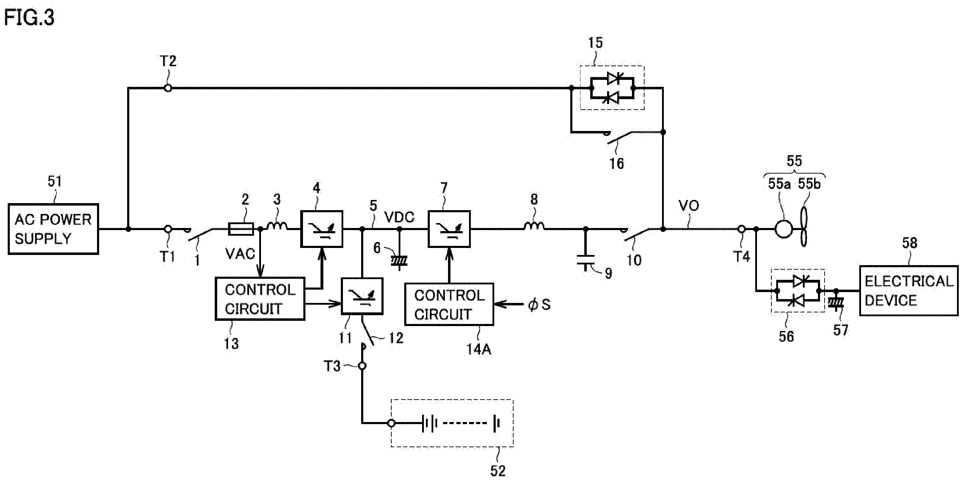

Fig. 3 is a circuit block diagram showing a configuration of an uninterruptible power supply according to a second embodiment of the present invention, as compared with Fig. 1. Referring to Fig. 3, this uninterruptible power supply is different from the uninterruptible power supply of Fig. 1 in that control circuit 14 is replaced with a control circuit 14A.

Control circuit 14A in response to activation command signal φS activates inverter 7 and controls inverter 7 to convert direct-current power into alternating-current power. During an activation period for activating inverter 7, control circuit 14 maintains ratio V/F of effective voltage value V of output voltage VO of the uninterruptible power supply (that is, voltage VO of output terminal T4) and frequency F of output voltage VO at fixed value K, while control circuit 14 gradually increases effective voltage value V of output voltage VO from a lower limit voltage value to a predetermined voltage value VI and also gradually increases frequency F of output voltage VO from a lower limit frequency to a predetermined frequency F1.

Predetermined voltage value VI is a voltage smaller than rated voltage value VR, and for example, VI = 0.95VR. Predetermined frequency F1 is a frequency smaller than rated frequency FR, and for example, F1 = 0.95FR.

To output terminal T4, for example, blower 55 is connected, and an electrical device 58 is connected via a semiconductor switch 56. A capacitor 57 is connected to an interconnect between semiconductor switch 56 and electrical device 58 for removing noise. Semiconductor switch 56 is turned on, for example, after the activation period of inverter 7 has ended. Blower 55 includes a motor 55a and an impeller 55b. Motor 55a rotatably drives impeller 55b at a rotation speed of a value corresponding to frequency F of output voltage VO of the uninterruptible power supply to blow air.

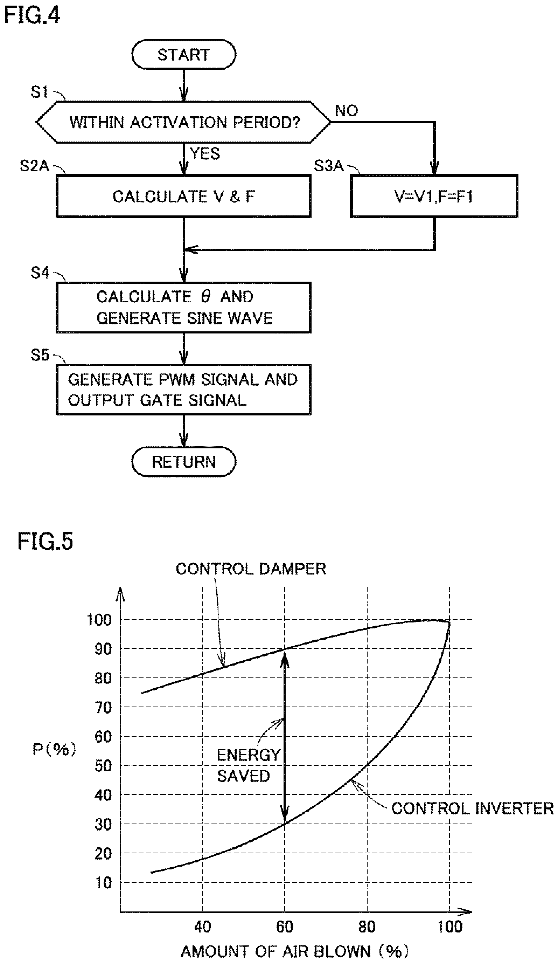

Fig. 4 is a flowchart showing an operation of control circuit 14A, as compared with Fig. 2. With reference to Fig. 4, in step S1, control circuit 14A determines whether it is currently within the activation period. Control circuit 14A activates inverter 7 in response to activation command signal φS. For example, when time t having passed since a time when activation command signal φS was received is equal to or less than predetermined time T (t≤T), control circuit 14A determines that it is within the activation period, whereas when time t exceeds predetermined time T (t>T), control circuit 14A determines that it is not within the activation period.

If control circuit 14A determines in step S1 that it is within the activation period, then, in step S2A, control circuit 14A calculates effective voltage value V and frequency F of output voltage VO based on time t from the time when activation command signal φS was received, and control circuit 14A then proceeds to step S4.

For example, control circuit 14A calculates effective voltage value V so that output voltage VO has effective voltage value V increasing from a lower limit voltage value in proportion to time t during the activation period and reaches predetermined voltage value VI when the activation period ends. Control circuit 14A calculates frequency F so that ratio V/F of effective voltage value V and frequency F has a fixed value K1. Fixed value K1 is set such that frequency F reaches predetermined frequency F1 when the activation period ends (K1 = V1/F1). Excitation current I passes through transformer 53, and when transformer 53 has a reactance L, I = V/(2πF × L) = K1/(2πL), and excitation current I has a fixed value.

If control circuit 14A determines in step S1 that currently it is not within the activation period, then, in step S3A, control circuit 14A sets effective voltage value V of output voltage VO to predetermined voltage value VI (V = V1), and sets frequency F of output voltage VO to predetermined frequency F1 (F = F1), and proceeds to step S4. Steps S4 and S5 are as has been described in Fig. 2. The remainder in configuration and operation is the same as that of the first embodiment, and accordingly, will not be described repeatedly.

An effect of the second embodiment will now be described. Fig. 5 is a diagram showing a relationship between an amount of air blown by blower 55 and power consumed P. An amount of air blown by blower 55 operated with alternating-current voltage VO of rated voltage VR and rated frequency FR is assumed to be 100%, and power consumed P at that time is assumed to be 100%. An amount of air blown by blower 55 increases with frequency F of output voltage VO of the uninterruptible power supply. Power consumed P by blower 55 increases in proportion to the cube of an operating frequency F. In other words, when operating frequency F is decreased, power consumed P by blower 55 decreases in proportion to the cube of operating frequency F.

In general, for blower 55, electrical device 58, and the like, a tolerable range is defined for each of power supply frequency F and power supply voltage V. For general electrical devices, power supply frequency F has a tolerable range of ± 5% of rated frequency FR and power supply voltage V has a tolerable range of ± 10% of rated voltage VR. Accordingly, blower 55 and electrical device 58 are operated without a hitch if effective voltage value V of output voltage VO of the uninterruptible power supply is set to predetermined voltage VI of 95% of rated voltage VR and frequency F of output voltage VO is set to predetermined frequency F1 of 95% of rated frequency FR.

Furthermore, when frequency F of output voltage VO is set to predetermined frequency F1 of 95% of rated frequency FR, then, as shown in Fig. 5, an amount of air blown by blower 55 is reduced to 95% of a rated amount of air blown, whereas power consumed P by blower 55 is reduced to 85.7% of rated power, and power consumed P can be reduced by about 14.2%. When blower 55 is the only load, operating frequency F can be further lowered, and power consumed P can further be reduced.

A method of controlling an amount of air blown by blower 55 includes an inverter control system in which the amount of air blown is controlled by controlling operating frequency F of blower 55, and a damper control system in which the amount of air blown is controlled by angularly controlling a damper (a control valve) while maintaining operating frequency F of blower 55 at a fix value. As can be seen from Fig. 5, the inverter control system can significantly reduce power consumption, as compared with the damper control system.

It should be understood that the embodiments disclosed herein have been described for the purpose of illustration only and in a non-restrictive manner in any respect. The scope of the present invention is defined by the terms of the claims, rather than the description above, and is intended to include any modifications within the meaning and scope equivalent to the terms of the claims.

### REFERENCE SIGNS LIST

T1: input terminal; T2: bypass terminal; T3: direct-current terminal; T4: output terminal; 1, 10, 12, 16: switch; 2: fuse; 3, 8: reactor; 4: converter; 5: direct-current bus; 6, 9, 57: capacitor; 7: inverter; 11: bidirectional chopper; 13, 14, 14A: control circuit; 15, 56: semiconductor switch; 51: alternating-current power supply; 52: storage battery; 53: transformer; 54: load; 55: blower; 55a: motor; 55b: impeller; 58: electrical device.

## Claims

1. An uninterruptible power supply configured to supply alternating-current power to a load by using electric power supplied from an alternating-current power supply or a power storage device, comprising:
a forward converter configured to convert alternating-current power supplied from the alternating-current power supply into direct-current power;
an inverse converter configured to convert the direct-current power generated by the forward converter or direct-current power of the power storage device into alternating-current power and supply the alternating-current power to the load; and
a control circuit configured to control the inverse converter,
when activating the inverse converter, the control circuit being configured to, while maintaining a ratio of a voltage value of an output voltage of the inverse converter and a frequency of the output voltage of the inverse converter at a predetermined value, gradually increase the voltage value of the output voltage of the inverse converter and the frequency of the output voltage of the inverse converter.

2. The uninterruptible power supply according to claim 1, wherein the control circuit is configured to increase the voltage value and frequency of the output voltage of the inverse converter to a rated voltage value and a rated frequency, respectively, of the load to drive the load.

3. The uninterruptible power supply according to claim 1, wherein the control circuit is configured to increase the voltage value of the output voltage of the inverse converter to a predetermined voltage value smaller than a rated voltage value of the load, and increase the frequency of the output voltage of the inverse converter to a predetermined frequency smaller than a rated frequency of the load to drive the load.
